# EUROPÄISCHE PATENTSCHRIFT

(11) **EP 2 673 527 B1**
(45) Veröffentlichungstag und Bekanntmachung des Hinweises auf die Patenterteilung: **14.09.2016**
(21) Anmeldenummer: 11796972.5
(22) Anmeldetag: 08.12.2011
(51) Int. Cl.: F16F 1/38

(54) **ELASTISCHES LAGER MIT EINTEILIGEM GEHÄUSE**
RESILIENT BEARING HAVING A ONE-PIECE HOUSING
PALIER ÉLASTIQUE À BOÎTIER MONOBLOC

(30) Priorität: 07.02.2011 DE 102011000538
(43) Veröffentlichungstag der Anmeldung: 18.12.2013
(73) Patentinhaber: ContiTech Vibration Control GmbH, 30165 Hannover (DE)
(72) Erfinder: FIRLA, Andreas, 31535 Neustadt (DE)
(74) Vertreter: Kilsch, Armin Ralph
(86) Internationale Anmeldenummer: PCT/EP2011/072185
(87) Internationale Veröffentlichungsnummer: WO 2012/107131

(56) Entgegenhaltungen:
- EP-A2- 2 159 442
- WO-A1-2006/112092
- JP-A- 2003 226 239
- US-A- 5 887 859
- US-A1- 2005 217 918

## Beschreibung

Die Erfindung betrifft ein elastisches Lager mit einem Innenteil, welches eine Aufnahmeeinrichtung, d.h. eine Buchse oder Auge o.ä. umfasst und mit einem das Innenteil mindestens teilweise umgebenden und als Lagergehäuse ausgebildeten Außenteil, bei dem Innenteil und Außenteil eine Auflage aus elastomerem Material aufweisen und durch einen Elastomerkörper, auch Tragfeder genannt, miteinander verbunden und auf Abstand gehalten sind, wobei das Innenteil und das Außenteil jeweils einteilig bzw. einstückig ausgebildet sind.

Derartige Lager werden häufig beispielsweise in Kraftfahrzeugen als schwingungsdämpfende Lagerungen eingesetzt. Dabei ist üblicherweise die Auslegung so, dass die wesentliche Kraftaufnahme in radialer Richtung erfolgt und die axiale Lagersteifigkeit dagegen meist deutlich geringer ist. Das Innenteil und das Gehäuse sind üblicherweise unlösbar über die an beiden Teilen anvulkanisierte elastomere Tragfeder bzw. den Tragkörper miteinander verbunden.

Solche Lagerelemente für Kraftfahrzeugmotoren müssen jedoch Kräfte aufnehmen können, die in alle Richtungen wirken. Die Kräfte, die bei Bewegung des Aggregates in Fahrzeuglängsrichtung und Fahrzeughochrichtung auftreten, werden über die die Tragfeder auf das Lagergehäuse überragen und durch letzteres abgestützt.

Für die Abstützung der auf das Lager wirkenden Kräfte gibt es in Stand der Technik unterschiedliche Möglichkeiten. Eine Möglichkeit nutzt beispielsweise die Montage des Lagerkörpers in ein einteiliges Gehäuse in Querrichtung. Mit einem solchen Lagerkonzept können dann aber nur Querkräfte in eine Richtung abgestützt werden. Sollen Querkräfte entgegengesetzt zur Montagerichtung abgestützt werden, ist mindestens ein Zusatzbauteil erforderlich.

Eine weitere Möglichkeit zur Aufnahme von Kräften unterschiedlicher Richtung ist die Verwendung eines zweiteiligen Gehäuses. Das Gehäuse umschließt den Tragkörper von oben und von unten, etwa in Form von Halbschalen, die miteinander verschraubt werden. Dabei wird ein Formschluss zwischen Innenteil und Gehäuse realisiert, so dass Querkräfte in/aus unterschiedlichen Richtungen abgestützt werden können.

Ein solches Lager ist beispielsweise aus der JP2003226239 bekannt. Für die Erfindung bestand daher die Aufgabe, ein einfaches elastisches Lager mit einem einteiligen Lagergehäuse und einer Tragfeder aus einem Elastomer bereitzustellen, mit dem hohe Kräfte in alle sechs Raumrichtungen ohne Verwendung von zusätzlichen Bauteilen abgestützt werden können.

Gelöst wird diese Aufgabe durch die Merkmale des Hauptanspruchs. Weitere vorteilhafte Ausbildungen sind in den Unteransprüchen offenbart. Zur Lösung der Aufgabe ist weiterhin ein Herstellverfahren für ein solches elastisches Lager offenbart sowie ein Motorlager solcher Ausführung für ein Fahrzeug.

Dabei weisen das Innenteil mindestens einen zur Innenwand des Außenteiles gerichteten Vorsprung und das Außenteil eine hierzu komplementäre Aufnahme oder Vertiefung auf, wobei der das Innenteil und das Außenteil verbindende Elastomerkörper und/oder die elastomeren Auflagen so ausgebildet sind, dass der Vorsprung mit einer Überdeckung in die Ausnehmung oder Vertiefung eintaucht bzw. eingreift, insbesondere bei Belastung des Lagers.

Damit erfolgen durch die "Überdeckung" zwischen Vorsprung und Ausnehmung eine Kraftaufnahme durch eine Art "Formschluss" und damit eine sichere Übertragung von Lagerkräften. Vorsprung, Ausnehmung, Elastomerkörper und Elastomerauflagen können dabei in ihrer geometrischen Gestaltung so ausgebildet sein, dass eine Kraftaufnahme in mindestens zwei Raumrichtungen bzw. Belastungsrichtungen erfolgt. Natürlich ist es ebenso möglich, eine Kraftaufnahme in vier Raumrichtungen durch die Überdeckung zu erreichen. Die restlichen Belastungen in den Haupt-Kraftrichtungen / Raumrichtungen werden wie üblich über Federkörper/Tragkörper und elastomere Auflagen sicher übertragen. Weiterhin weist, zur Montage des Lagers, das Lagergehäuse eine Öffnung auf, die größer ist als die Höhe des Innenteiles unter Berücksichtigung des Vorsprungs. Somit kann das Innenteil vor der Vulkanisation des Bauteils in das Gehäuse eingeführt werden. Wenn das Innenteil bis zur Mitte in das Gehäuse eingeführt ist, kann das Innenteil nach unten geschoben werden, dabei taucht ein "Schwert" am Innenteil in eine Öffnung am Gehäuse ein. In dieser Position wird der Elastomerkörper haftend an das Gehäuse und das Innenteil angespritzt, wie auch in dem beanspruchten vorteilhaften Verfahren offenbart. Bei letzterem werden, wie gesagt, nach Einführen des Innenteils in das Außenteil und lagerichtiger Positionierung des Vorsprungs in der Ausnehmung die Elastomerauflagen und der Elastomerkörper mit Hilfe von üblichen und in und am Lagergehäuse temporär angebrachten Formen und Einsätzen angespritzt und anvulkanisiert. So könnte z. B. in vorteilhafter weise in einer Kraftaufnahmerichtung des Lagers die Ausnehmung auch so groß sein, dass die Überdeckung bzw. der "formschlüssige", ggf. durch Elastomerteile beabstandete oder gedämpfte Kontakt zwischen Vorsprung und Ausnehmung nicht zur Kraftaufnahme dient. Die in dieser Kraftaufnahmerichtung wirkende Kraft auf das Lager kann dann zwischen Innenteil und Gehäuse über den Tragkörper aufgenommen werden.

Das einteilige Gehäuse/Außenteil besteht dabei üblicherweise aus Metall oder Kunststoff, ebenso wie das Innenteil. Der Vorsprung ist einstückig mit dem Innenteil verbunden, d.h. integrales "Teil" des Innenteiles bzw. am Innenteil z.B. als vorspringende Nase, Schwert oder Bolzen ausgeformt. Der elastomere Körper bzw. die Tragfeder und die elastomeren Auflagen bestehen bei diesen Lagern üblicherweise aus Gummi.

Ein zweiteiliges Gehäuses oder der Verwendung von zusätzlichen Bauteilen zur Realisierung eines in mehreren Richtungen wirksamen Anschlags für insbesondere Querkräfte ist damit nicht mehr erforderlich.

Eine vorteilhafte Weiterbildung besteht darin, dass das Innenteil als Lagerbuchse, also im Wesentlichen zylindrisch ausgebildet ist und dass das Außenteil bzw. Lagergehäuse das Innenteil in Form einer z.B vorn und hinten offenen Lagerhülse umgibt, wobei die Lagerbuchse einen an ihrem Umfang befindlichen radialen Vorsprung aufweist, der in eine Ausnehmung der Lagerhülse eingreift. Wie oben bereits dargestellt kann der Vorsprung in Form eines Blocks, eines Schwerts, einer vorspringenden Nase oder auch als Bolzen ausgebildet sein.

Dabei ist eine besonders einfache Ausbildung so ausgestaltet, dass die dem radialen Vorsprung gegenüberliegende elastomere Auflage auf der Innenseite der Lagerhülse und/oder die dem radialen Vorsprung gegenüberliegende elastomere Auflage auf der Außenseite der Lagerbuchse so ausgebildet sind, dass der Vorsprung bei durch die Lagergeometrie vorbestimmten entsprechenden Belastungsrichtungen des Lagers in die Ausnehmung eintaucht/eingreift.

Damit muss lediglich die Dicke der Auflagen so angepasst werden, dass Durch die Überdeckung in vertikaler Richtung zwischen Vorsprung/Schwert am Innenteil und dem Gehäuse können Querkräfte in beide Richtungen abgestützt werden. Dabei muss die in der Regel als Gummiauflage ausgeführte elastomere Auflage an der oberen Innenwand des Gehäuses so dick ausgeführt werden, dass auch unter hohen Kräften in Hochrichtung (nach oben), stets eine Überdeckung zwischen dem Vorsprung am Innenteil und der Ausnehmung im/am Gehäuse vorhanden bleibt, so dass in jeder Position Querkräfte über das Gehäuse abgestützt werden können.

Eine weitere vorteilhafte Ausbildung besteht darin, dass der Vorsprung und die Ausnehmung sich im Wesentlichen in der Richtung der der Hauptlagerkraft bzw. in Hauptbelastungsrichtung oder Haupt-Betriebskraft des Lagers erstrecken. Der Vorsprung am Innenteil könnte z.B. seitlich angebracht sein und taucht so auf der Seite in eine entsprechende Ausnehmung des Gehäuses ein, in deren Erstreckungsrichtung auch die Vorlast durch das Aggregat, z.B. ein Getriebe, am Innenteil wirkt. Somit ergibt sich im Betriebszustand durch die statische Einfederung des Innenteils eine höhere Überdeckung zwischen Schwert am Innenteil und Ausnehmung am Gehäuse, als im Konstruktionszustand.

Dabei besteht eine weitere vorteilhafte Ausbildung darin, dass zur Montage des Lagers die Öffnung bzw. der Innendurchmesser der Lagerhülse um einen Betrag von 0,5 bis 1,5 mm größer ausgebildet ist die Summe von Durchmesser der Lagerbuchse und Höhe des Vorsprungs. Das reicht zur Montage und erlaubt trotzdem die sparsame Verwendung von Elastomermaterial beim Anspritzen.

Besonders geeignet sind solche elastischen Lager als Motorlager für Personenkraftwagen. Anhand eines Ausführungsbeispieles soll die Erfindung näher erläutert werden. Es zeigen
- Fig. 1: ein erfindungsgemäßes elastisches Lager vor dem Zusammenbau
- Fig. 2: ein erfindungsgemäßes elastisches Lager teilweise montiert
- Fig. 3: ein erfindungsgemäßes elastisches Lager teilweise montiert und positioniert
- Fig. 4: ein erfindungsgemäßes elastisches Lager nach Fertigstellung im Schnitt

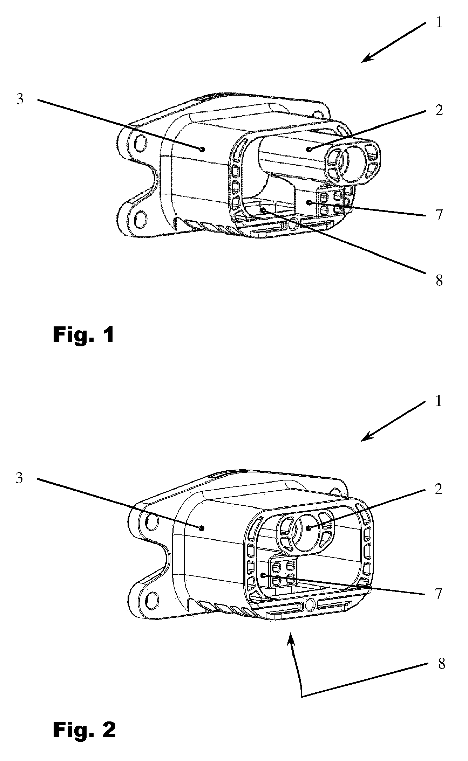

Die Fig. 1 bis 4 sind am besten in der Zusammenschau zu verstehen.

Fig. 1 zeigt ein elastisches Lager 1 vor dem Zusammenbau. Das elastische Lager 1 ist mit einem als Lagerbuchse ausgebildeten Innenteil 2 versehen sowie mit einem das Innenteil 2 nach dem Zusammenbau mindestens teilweise umgebenden und als Lagergehäuse ausgebildeten Außenteil 3.

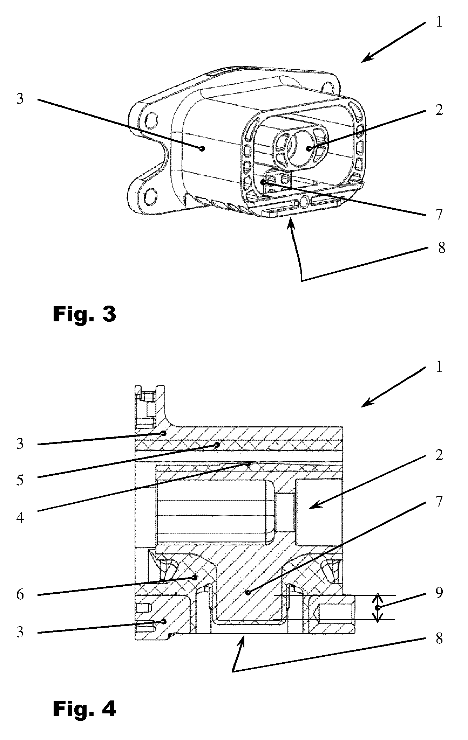

Wie in der Zusammenschau mit der Fig. 4 erkennbar, weisen Innenteil 2 und Außenteil 3 Auflagen 4 und 5 aus elastomerem Material auf und sind durch einen Elastomerkörper 6 miteinander verbunden und auf Abstand gehalten.

Innenteil 2 und das Außenteil 3 sind jeweils einteilig ausgebildet.

Das als Lagerbuchse ausgebildete Innenteil 2 weist einen am Umfang befindlichen radialen Vorsprung 7 auf, der in Richtung zur Innenwand des Außenteiles hervorspringt.

Das Außenteil 3 ist in Form einer Lagerhülse ausgebildet und weis eine zum Vorsprung 7 des Innenteils 2 komplementäre Ausnehmung 8 auf, in die der Vorsprung 7 eingreift.

Der das Innenteil und das Außenteil verbindende Elastomerkörper 6 und die elastomeren Auflagen 4 und 5 sind dabei so ausgebildet sind, dass der Vorsprung 7 bei allen Belastungsrichtungen des Lagers in die Vertiefung/Ausnehmung 8 eintaucht/eingreift.

Maßgeblich und wichtig ist hier die Dicke der elastomere Auflage 4 auf dem Innenteil 2 und die elastomere Auflage 5 auf der Innenseite der Lagerhülse 3 in den Bereichen, die dabei dem radialen Vorsprung 7 gegenüberliegen.

Das aus Innenteil 2 und Außenteil 3 zusammengebaute Lager 1 zeigen die Fig. 2 und 3, wobei die Fig. 2 das Lager zeigt, nachdem das als Lagerbuchse ausgebildete Innenteil 2 in das ist in Form einer Lagerhülse ausgebildet Außenteil 3 eingeschoben wurde und die Fig. 3 dieselben Teile zeigt, nachdem das Innenteil 2 in das Außenteil 3 eingefügt wurde und lagerichtig so positioniert ist, dass der Vorsprung 7 in die Ausnehmung 8 eingreift.

Es ergibt sich somit für den Vorsprung 7 und die Ausnehmung 8 eine "Überdeckung" 9.

In diesem Zustand werden die Elastomerauflagen 4 und 5 und der Elastomerkörper 6 mit Hilfe von in und am Lagergehäuse temporär angebrachten und hier nicht näher dargestellten Formen und Einsätzen angespritzt und anvulkanisiert.

Das Lagergehäuse bzw. Außenteil 3 weist eine Innenöffnung auf, die um einen Betrag von 0,8 mm größer ausgebildet ist die Summe von Durchmesser der Lagerbuchse und Höhe des Vorsprungs 7 des Innenteiles 2.

### Bezugszeichenliste

### (Teil der Beschreibung)

- 1: Elastisches Lager
- 2: Innenteil bzw. Lagebuchse
- 3: Außenteil bzw. Lagerhülse
- 4: Auflage aus elastomerem Material
- 5: Auflage aus elastomerem Material
- 6: Elastomerkörper
- 7: Vorsprung
- 8: Ausnehmung
- 9: Überdeckung

## Patentansprüche

1. Motorlager für einen Personenkraftwagen (1) mit einem Innenteil (2), welches eine Aufnahmeeinrichtung umfasst und mit einem das Innenteil (2) mindestens teilweise umgebenden und als Lagergehäuse ausgebildeten Außenteil (3), bei dem Innenteil (2) und Außenteil (3) eine Auflage (4, 5) aus elastomerem Material aufweisen und durch einen Elastomerkörper (6) miteinander verbunden und auf Abstand gehalten sind, wobei das Innenteil (2) und das Außenteil (3) jeweils einteilig ausgebildet sind, **dadurch gekennzeichnet, dass** das Innenteil (2) mindestens einen zur Innenwand des Außenteiles (3) gerichteten Vorsprung (7) und das Außenteil eine hierzu komplementäre Ausnehmung oder Vertiefung (8) aufweisen, wobei der das Innenteil (2) und das Außenteil (3) verbindende Elastomerkörper (6) und/oder die elastomeren Auflagen (4, 5) so ausgebildet sind, dass der Vorsprung (7) mit einer Überdeckung (9) in die Ausnehmung (8) eintaucht/eingreift; wobei der Vorsprung (7), die Ausnehmung (8), der Elastomerkörper (6) und die elastomeren Auflagen (4, 5) in ihrer geometrischen Gestaltung so ausgebildet sind, dass eine Kraftaufnahme in mindestens zwei Raumrichtungen bzw. Belastungsrichtungen des Lagers erfolgt, wobei zur Montage des Lagers das Lagergehäuse eine Öffnung aufweist, die größer ist als die Höhe des Innenteiles unter Berücksichtigung des Vorsprungs und wobei das Innenteil vor der Vulkanisation des Bauteiles in das Lagergehäuse einführbar ist

2. Motorlager nach Anspruch 1, bei dem das Innenteil (2) als Lagerbuchse ausgebildet ist und bei dem das Außenteil (3) das Innenteil (2) in Form einer Lagerhülse umgibt, wobei die Lagerbuchse einen an ihrem Umfang befindlichen radialen Vorsprung (7) aufweist, der in eine Ausnehmung (8) der Lagerhülse eingreift.

3. Motorlager nach Anspruch 1 oder 2, bei dem die dem radialen Vorsprung (7) gegenüberliegende elastomere Auflage (5) auf der Innenseite der Lagerhülse und/oder die dem radialen Vorsprung (7) gegenüberliegende elastomere Auflage (4) auf der Außenseite der Lagerbuchse so ausgebildet sind, dass der Vorsprung (7) bei mit einer Überdeckung (9) in die Ausnehmung (8) eintaucht/eingreift.

4. Motorlager nach einem der Ansprüche 1 bis 3, bei dem der Vorsprung (7) und die Ausnehmung (8) sich im Wesentlichen in der Richtung der Hauptlagerkraft / Hauptbelastungsrichtung oder Haupt-Betriebskraft des Lagers erstrecken.

5. Motorlager nach einem der Ansprüche 3 oder 4, bei dem zur Montage des Lagers der Innendurchmesser der Lagerhülse um einen Betrag von 0,5 bis 1,5 mm größer ausgebildet ist die Summe von Außendurchmesser der Lagerbuchse und Höhe des Vorsprungs.

6. Verfahren zur Herstellung eines Motorlagers nach einem der Ansprüche 1 bis 5, bei dem nach Einführen des Innenteils (2) in das Außenteil (3) und lagerichtiger Positionierung des Vorsprungs (7) in der Ausnehmung (8) die Elastomerauflagen (4, 5) und der Elastomerkörper (6) mit Hilfe von in und am Lagergehäuse temporär angebrachten Formen und Einsätzen angespritzt und anvulkanisiert werden.

## Claims

1. Engine mount for a passenger car (1) having an inner part (2) which comprises a receiving device, and having an outer part (3) which surrounds the inner part (2) at least partially and is configured as a mount housing, in which the inner part (2) and the outer part (3) have a rest (4, 5) made from elastomeric material, and are connected to one another and held at a spacing by way of an elastomer body (6), the inner part (2) and the outer part (3) in each case being configured in one piece, **characterized in that** the inner part (2) has at least one projection (7) which is directed towards the inner wall of the outer part (3), and the outer part has a recess or depression (8) which is complementary with respect to the said projection (7), the elastomer body (6) which connects the inner part (2) and the outer part (3) and/or the elastomeric rests (4, 5) being configured in such a way that the projection (7) dips/engages with an overlap (9) into the recess (8); the projection (7), the recess (8), the elastomer body (6) and the elastomeric rests (4, 5) being configured in terms of their geometric design in such a way that an absorption of force takes place in at least two spatial directions or loading directions of the mount, the mount housing having an opening for assembling the mount, which opening is greater than the height of the inner part with the projection being taken into consideration, and it being possible for the inner part to be introduced into the mount housing before the vulcanization of the component.

2. Engine mount according to Claim 1, in which the inner part (2) is configured as a bearing bush, and in which the outer part (3) surrounds the inner part (2) in the form of a bearing sleeve, the bearing bush having a radial projection (7) which is situated on its circumference and engages into a recess (8) of the bearing sleeve.

3. Engine mount according to Claim 1 or 2, in which that elastomeric rest (5) on the inner side of the bearing sleeve which lies opposite the radial projection (7) and/or that elastomeric rest (4) on the outer side of the bearing bush which lies opposite the radial projection (7) are/is configured in such a way that the projection (7) dips/engages with an overlap (9) into the recess (8).

4. Engine mount according to one of Claims 1 to 3, in which the projection (7) and the recess (8) extend substantially in the direction of the main mount force/main loading direction or main operating force of the mount.

5. Engine mount according to either of Claims 3 and 4, in which, in order to assemble the mount, the internal diameter of the bearing sleeve is configured to be greater by an amount of from 0.5 to 1.5 mm than the sum of the external diameter of the bearing bush and the height of the projection.

6. Method for producing an engine mount according to one of Claims 1 to 5, in which, after introduction of the inner part (2) into the outer part (3) and positionally correct positioning of the projection (7) in the recess (8), the elastomeric rests (4, 5) and the elastomer body (6) are moulded on and vulcanized on with the aid of moulds and inserts which are attached temporarily in and on the mount housing.

## Revendications

1. Palier de moteur pour une voiture particulière (1) avec une pièce intérieure (2), laquelle comprend un dispositif de logement et avec une pièce extérieure (3) entourant au moins en partie la pièce intérieure (2) et conçue en tant que logement de palier, dans lequel la pièce intérieure (2) et la pièce extérieure (3) comportent un appui (4, 5) en matière élastomère et sont reliées ensemble et maintenues avec un écart par un corps élastomère (6), la pièce intérieure (2) et la pièce extérieure (3) étant conçues chacune en monobloc,
**caractérisé en ce que** la pièce intérieure (2) comporte au moins une saillie (7) dirigée vers la paroi intérieure de la pièce extérieure (3) et la pièce extérieure comporte un évidement ou un creux (8) complémentaire à celle-ci, le corps élastomère (6) reliant la pièce intérieure (2) et la pièce extérieure (3) et/ou les appuis (4, 5) élastomères étant conçus de telle sorte que par un recouvrement (9), la saillie (7) plonge / s'engage dans l'évidement (8) ; dans leur configuration géométrique, la saillie (7), l'évidement (8), le corps élastomère (6) et les appuis élastomères (4, 5) étant conçus de sorte qu'il s'effectue une absorption de force dans au moins deux directions dans l'espace ou directions de charge du palier, pour le montage du palier, le logement de palier comportant un orifice qui est plus grand que la hauteur de la pièce intérieure, sous considération de la saillie et avant la vulcanisation du composant, la pièce intérieure pouvant être introduite dans le logement de palier.

2. Palier de moteur selon la revendication 1, dans lequel la pièce intérieure (2) est conçue en tant que coussinet et sur lequel la pièce extérieure (3) entoure la pièce intérieure (2) sous la forme d'un manchon de palier, le coussinet de palier comportant une saillie (7) radiale se trouvant sur sa périphérie qui s'engage dans un évidement (8) du manchon de palier.

3. Palier de moteur selon la revendication 1 ou 2, dans lequel l'appui élastomère (5) opposé à la saillie (7) radiale sur la face intérieure du manchon de palier et/ou l'appui élastomère (4) opposé à la saillie (7) radiale sur la face extérieure du manchon de palier sont conçus de sorte que par un recouvrement (9), la saillie (7) plonge / s'engage dans l'évidement (8).

4. Palier de moteur selon l'une quelconque des revendications 1 à 3, dans lequel la saillie (7) et l'évidement (8) s'étendent sensiblement dans la direction principale de la force exercée sur le palier / ou de la direction principale de charge ou de la force de service principale du palier.

5. Palier de moteur selon l'une quelconque des revendications 3 ou 4, dans lequel, pour le montage du palier, le diamètre intérieur du manchon de palier est conçu en étant supérieur d'une valeur de 0,5 à 1,5mm que la somme du diamètre extérieur du manchon de palier et de la hauteur de la saillie.

6. Procédé destiné à fabriquer un palier de moteur selon l'une quelconque des revendications 1 à 5, lors duquel après l'introduction de la pièce intérieure (2) dans là pièce extérieure (3) et le positionnement adéquat de la saillie (7) dans l'évidement (8), on injecte et on vulcanise les appuis élastomères (4, 5) et les corps élastomères (6) à l'aide de moules et d'inserts temporairement montés sur le logement de palier.
